# EUROPÄISCHE PATENTSCHRIFT

(11) **EP 0 817 513 B1**
(45) Veröffentlichungstag und Bekanntmachung des Hinweises auf die Patenterteilung: **31.10.2001**
(21) Anmeldenummer: 97109587.2
(22) Anmeldetag: 12.06.1997
(51) Int. Cl.: H04Q 7/22, H04Q 7/24, H04Q 7/26

(54) **Verfahren und System zur Behandlung von jeweils in einem privaten Netz und in einem Mobilfunknetz nutzbaren Zusatzdiensten**
Method and system for processing supplementary services usable in a private network and a mobile communication network
Procédé et système de traitement de services supplémentaires utilisable aussi bien dans un réseau privé que dans un réseau de communication mobile

(30) Priorität: 24.06.1996 DE 19625226
(43) Veröffentlichungstag der Anmeldung: 07.01.1998
(73) Patentinhaber: SIEMENS AKTIENGESELLSCHAFT, 80333 München (DE)
(72) Erfinder: Rau, Helmut, Dipl.-Math., 82110 Germering (DE); Muysewinkel, Koen, Dipl.-Ing., 3220 Holsbeek (BE)

(56) Entgegenhaltungen:
- EP-A- 0 700 227
- EP-A- 0 726 686
- WO-A-94/26073
- DE-A- 4 343 335

## Beschreibung

Die Erfindung betrifft ein Verfahren und ein System zur Behandlung von Zusatzdiensten gemäß dem Oberbegriff des Patentanspruchs 1 bzw. des Patentanspruchs 9.

Ein öffentliches Mobilkommunikationsnetz, wie beispielsweise das internationale Mobilfunknetz nach dem GSM-Standard (Global System for Mobile Communication) stellt bekanntlich den mobilen Teilnehmern über Ländergrenzen hinweg Basis-Telekommunikationsdienste, wie beispielsweise Fernsprechdienste und/oder Datendienste, und Zusatzdienste (Supplementary Services) zur Verfügung stellt. Der Zusatzdienst ist ein Dienst, der einen Basis-Telekommunikationsdienst modifiziert oder erweitert und mit ihm in Verbindung steht. Beispiele für Zusatzdienste sind "Rufnummer-Identifizierung", "Anrufumlenkung (call forwarding)", Gebührenanzeige" usw.. Die Dienstedaten der Zusatzdienste werden als Teilnehmerdaten im Mobilfunknetz registriert, z.B. in deren Teilnehmerdatenbasen (Heimatregister, Besucherregister), gespeichert. Das öffentliche Mobilfunknetz läßt sich mit anderen Netzen, beispielsweise einem öffentlichen Fernsprechnetz (PSTN) oder einem diensteintegrierenden Nachrichtennetz (ISDN) oder einem weiteren leitungsgebundenen Netz, verbinden. Auch Verbindungen zwischen dem GSM-Mobilfunknetz und anderen öffentlichen Mobilkommunikationsnetzen sind möglich. Das GSM-Mobilfunknetz ist ein digitales, aus einer großen Anzahl von Funkzellen zellular aufgebautes Mobilfunksystem. Dabei wird jede Funkzelle von einer Basis-Sende-Empfangsstation bedient, die die Verbindungen zu den Mobilstationen der Teilnehmer über die Luftschnittstelle jeweils herstellt. Eine oder mehrere Basis-Sende-Empfangsstationen werden von einer Basisstationssteuerung betreut.

Eine oder mehrere Basisstationssteuerungen sind jeweils an eine Mobilvermittlungsstelle angeschaltet, die für einen bestimmten Versorgungsbereich im Mobilfunknetz die vermittlungstechnischen Funktionen übernimmt. Zu den vermittlungstechnischen Funktionen gehören die Leitweglenkung, d.h. die Auswahl der Leitwege, und der Aufbau von Verbindungen zur Signalisierung und zur Anrufdurchschaltung. Darüber hinaus führt die Mobilvermittlungsstelle mobilfunkspezifische Funktionen, die sich aus der Mobilität der Teilnehmer ergeben, aus. Den Mobilvermittlungsstellen ist jeweils eine Teilnehmerdatenbasis (Besucherregister) zugeordnet, in der Teilnehmerdaten und Aufenthaltsinformationen für die Teilnehmer, die sich gerade in dem Versorgungsbereich der Mobilvermittlungsstelle aufhalten, gespeichert sind. Diese Teilnehmerdatenbasis übernimmt beispielsweise Funktionen der Verbindungsbehandlung, des Verbindungsaufbaus und der Aufenthaltsregistrierung. Als Aufenthaltsinformation ist üblicherweise eine Aufenthaltsbereichskennung (Location Area Identity) in der Teilnehmerdatenbasis gespeichert.

Aus dem Aufsatz "Einen Schritt näher am Personal Communicator", telcom report 18, 1995, Seiten 308-309 ist es bekannt, daß die die Mobilvermittlungsstelle in einer kombinierten Betriebsart neben Mobilfunkteilnehmern auch drahtgebundene ISDN-Teilnehmer bedient, die über Nebenstelleneinrichtungen (Private Branche Exchanges) anschließbar sind. Somit entstehen Verbindungen zwischen Mobilvermittlungsstellen des öffentlichen Mobilfunknetzes und Nebenstelleneinrichtungen eines privaten Netzes, durch das beispielsweise mehrere Standorte einer Firma oder mehrere Firmen untereinander verbunden sind. Außerdem ist es möglich, über die Mobilvermittlungsstelle auch den DECT-Standard (Digital Enhanced Cordless Telecommunication) für Schnurlossysteme einzubeziehen, sodaß der Teilnehmer entweder über die GSM-Funkabdeckung im öffentlichen Mobilfunknetz - z.B. auf Reisen - oder über die DECT-Funkabdeckung im privaten Netz - z.B. am Arbeitsplatz- erreichbar ist. Dabei können Zusatzdienste von den Teilnehmern auch im privaten Netz genutzt und die Dienstedaten im privaten Netz registriert werden.

Ein derartiges System wird in WO-A-9 426 073 offenbart, das den nächstliegenden Stand der Tecknik darstellt.

Bekanntlich können Teilnehmerselbsteingaben (subscriber controlled input) in die Teilnehmerstationen, über die ankommende Anrufe empfangen und abgehende Anrufe ausgesendet werden, vorgenommen werden. Dies bedeutet, daß durch derartige Teilnehmerselbsteingaben die Zusatzdienste von den Teilnehmern selbst steuerbar und die zu den Diensten gehörigen Dienstedaten änderbar sind. Beispielsweise läßt sich auf diese Weise der Dienst "Anrufumlenkung" aktivieren/deaktivieren oder die Zielrufnummer, zu der der ankommende Anruf umgelenkt werden soll, vom Teilnehmer ändern. Die Wirkungsweise der Zusatzdienste und insbesondere derer Änderungen hängt davon ab, ob der Teilnehmer sich gerade unter GSM-Funkabdeckung oder DECT-Funkabdekkung bei einem im Anschluß an eine Änderung der Dienstedaten ankommenden Anruf befindet. Ebenso ist für die Wirkungsweise von Bedeutung, ob bei dem ankommenden Anruf eine Mobilteilnehmer-rufnummer oder eine Rufnummer, unter der der angerufene Teilnehmer an der Nebenstelleneinrichtung erreichbar ist, gewählt wird.

Es ist daher Aufgabe der Erfindung, ein Verfahren und ein System zur netzübergreifenden Behandlung von Zusatzdiensten unabhängig vom Aufenthaltsort des im privaten Netz und im Mobilfunknetz sich bewegenden Teilnehmers anzugeben.

Diese Aufgabe wird gemäß der Erfindung durch die Merkmale des Patentanspruchs 1 hinsichtlich des Verfahrens und durch die Merkmale des Patentanspruchs 9 hinsichtlich des Systems gelöst. Weiterbildungen der Erfindung sind in den Unteransprüchen angegeben.

Demnach werden bei einem Wechsel des Aufenthaltsorts des mobilen Teilnehmers vom Bereich einer Nebenstelleneinrichtung in den Versorgungsbereich einer Mobilvermittlungsstelle oder umgekehrt jeweils die Dienstedaten der Zusatzdienste vom ursprünglichen Netz bereitgestellt und über eine Schnittstelle zwischen beiden Netzen netzübergreifend zum neuen Netz übertragen und dort ebenfalls registriert. Dadurch informieren sich die beiden Netze, das private Netz und das öffentliche Mobilfunknetz, bei einem Aufenthaltswechsel gegenseitig über den Status der Zusatzdienste, so daß die Wirkungsweise der Zusatzdienste bzw. die Wirkungsweise von Änderungen der Dienstedaten gewährleistet ist, unabhängig davon, in welchem Netz der den Zusatzdienst beanspruchende Teilnehmer sich gerade aufhält. Durch die Datenkonsistenz in beiden Netzen, die sich bezüglich der Zusatzdienste gegenseitig synchronisieren, sind Änderungen der Dienstedaten der Zusatzdienste unmittelbar in dem Netz wirksam, unter deren Funkabdeckung der Teilnehmer bedient wird. Dies bedeutet beispielsweise, daß ein Zusatzdienst, der vom Teilnehmer bei dessen Aufenthalt im privaten Netz aktiviert wurde, unmittelbar zu einem späteren Zeitpunkt, an dem er sich im Mobilfunknetz befindet, unmittelbar rückgängig gemacht werden kann. Der vom jeweils anderen Netz gemeldete Status der Zusatzdienste wird im eigenen Netz registriert, als hätte der Teilnehmer eine entsprechende Teilnehmerselbsteingabe zur Steuerung der Zusatzdienste im Einflußbereich des eigenen Netzes vorgenommen.

Gemäß einer Weiterbildung der Erfindung werden die jeweils im Bereich einer Nebenstelleneinrichtung durch Teilnehmerselbsteingabe bedingten Änderungen der Dienstedaten unmittelbar vom privaten Netz zum Mobilfunknetz gemeldet und die geänderten Dienstedaten in mindestens einer Teilnehmerdatenbasis des Mobilfunknetzes gespeichert. Dies bedeutet, daß der neue Status der zu einem Zusatzdienst gehörigen Dienstedaten bei einem Wechsel des Aufenthaltsorts vom privaten Netz zum Mobilfunknetz sofort dem neuen Netz zur Kenntnis gebracht und darin registriert wird. Von Vorteil ist dabei, wenn die geänderten Dienstedaten in einer Nachricht, in der das Vorliegen einer Teilnehmerselbsteingabe mitgeteilt wird, von der Nebenstelleneinrichtung zur Mobilvermittlungsstelle netzübergreifend übertragen werden.

Gemäß einer anderen Weiterbildung der Erfindung werden die jeweils im Versorgungsbereich einer Mobilvermittlungsstelle durch Teilnehmerselbsteingabe bedingten Änderungen der Dienstedaten nach Übertritt des Teilnehmers in den Bereich einer Nebenstelleneinrichtung vom Mobilfunknetz zum privaten Netz gemeldet, und die geänderten Dienstedaten in mindestens einer Teilnehmerdatenbasis des privaten Netzes gespeichert.

Vorzugsweise wird der Status, der zu einem Zusatzdienst gehörigen Dienstedaten, von der Mobilvermittlungsstelle zur Nebenstelleneinrichtung erst dann übertragen, wenn zuvor die Mobilvermittlungsstelle von der Nebenstelleneinrichtung eine Nachricht empfangen hat, durch die eine Aktualisierung einer in einer Teilnehmerdatenbasis des Mobilfunknetzes registrierten Aufenthaltsinformation bewirkt wird. Dies hat den Vorteil, daß die geänderten Dienstedaten gemeinsam mit einer Nachricht übertragen wird, die zur Unterstützung der Mobilität des Teilnehmers zwischen privatem Netz und Mobilfunknetz ohnehin erforderlich ist, um die Teilnehmerdatenbasis zur Registrierung der Aufenthaltsinformationen für die von ihr betreuten Teilnehmer auf einen aktuellen Stand zu bringen.

Dabei wird gemäß einer Weiterbildung der Erfindung in der Nachricht eine Nebenstellen-Leitwegnummer mitgeteilt und als Aufenthaltsinformation in der Teilnehmerdatenbasis gespeichert. Die Nebenstellen-Leitwegnummer gibt an, wie der Teilnehmer über die Nebenstelleneinrichtung im privaten Netz erreichbar ist.

Die Erfindung wird anhand eines in Figuren dargestellten Ausführungsbeispiels näher erläutert. Im einzelnen zeigen
- Figur 1: das Blockschaltbild einer grundlegenden Konfiguration eines privaten Netzes und eines öffentlichen Mobilfunknetzes, in denen sich mobile Teilnehmer mit ihren Funkteilnehmerstationen bewegen können,
- Figur 2: den netzübergreifenden Nachrichtenfluß zur Behandlung von Zusatzdiensten bei einem Aufenthaltsortwechsel des mobilen Teilnehmers vom privaten Netz zum Mobilfunknetz und
- Figur 3: den netzübergreifenden Nachrichtenfluß zur Behandlung der Zusatzdienste bei einem Aufenthaltsortswechsel des mobilen Teilnehmers vom Mobilfunknetz in das private Netz.

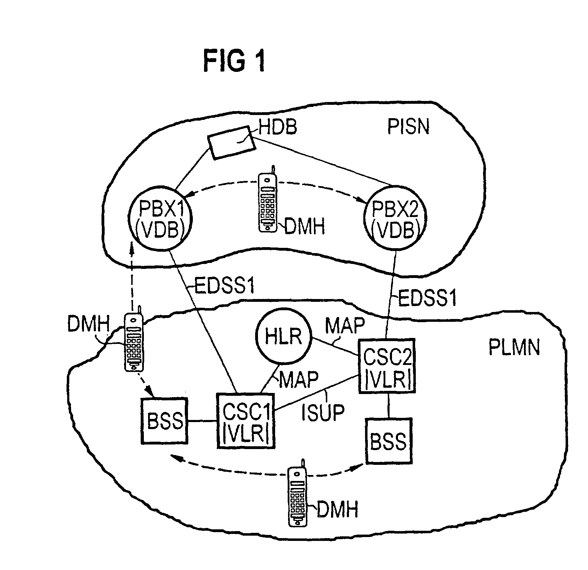

Figur 1 zeigt in einem Blockschaltbild die grundlegende Struktur eines beispielsweise auf der Basis des GSM-Standards arbeitenden öffentlichen Mobilfunknetzes PLMN und eines beispielsweise auf der Basis des DECT-Standards privaten Netzes PISN zur Unterstützung der Mobilität von mobilen Teilnehmern zwischen den beiden Netzen und zur Behandlung von Zusatzdiensten, die von den mobilen Teilnehmern in beiden Netzen in Anspruch genommen werden können. Das öffentliche Mobilfunknetz PLMN ist beispielsweise ein digitales, zellular aufgebautes Mobilkommunikationssystem nach dem GSM-Standard. Das Mobilfunknetz PLMN weist ein funktechnisches Teilsystem, ein vermittlungstechnisches Teilsystem und ein Bedienungs- und Wartungs-Teilsystem auf. Das funktechnische Teilsystem umfaßt das Basisstationssystem BSS mit Basis-Sende-Empfangsstationen, die die Funkabdeckung über die Funkzellen des gesamten Versorgungsbereichs gewährleisten, und Basisstationssteuerungen, sowie die Teilnehmerstationen, die im vorliegenden Beispiel gemäß Figur 1 als kombinierte Funkteilnehmerstationen DMH, d.h. Dual-Mode-Funkteilnehmerstationen mit GSM-Modus und DECT-Modus, ausgebildet sind. Dabei ermöglicht die Dual-Mode-Funkteilnehmerstation DMH eine Anbindung des mobilen Teilnehmers über ein Schnurlossystem, beispielsweise das standardisierte DECT-Schnurlossystem (Digital Enhanced Cordless Telecommunication), sowie über das GSM-Mobilkommunikationssystem.

Zur Gleichberechtigung des Teilnehmers einerseits im Schnurlossystem und andererseits im Mobilkommunikationssystem verfügt die Dual-Mode-Funkteilnehmerstation DMH über eine erste Rufnummer, die private Rufnummer, und über eine zweite Rufnummer, die öffentliche Rufnummer (MSISDN, Mobile Subscriber ISDN Number), über die der mobile Teilnehmer unabhängig von seinem momentanen Aufenthaltsort erreichbar ist. Die Basisstationssteuerungen des Basisstationssystems BSS übernehmen die Übertragungs- und Steuerfunktionen bei der Funkversorgung und verbinden das Basisstationssystem mit dem vermittlungstechnischen Teilsystem, das mehrere Mobilvermittlungsstellen sowie Teilnehmerdatenbasen und ein Authentifikationszentrum aufweist. Im vorliegenden Beispiel sind zwei Mobilvermittlungsstellen CSC1 und CSC2 dargestellt, von denen die Verbindungssteuerungsfunktionen bereitgestellt werden. Dabei übernehmen die Mobilvermittlungsstellen CSC1, CSC2 vermittlungstechnische Aufgaben, wie Auswahl der Leitwege und Aufbau von Nutz- und Zeichengabeverbindungen, sowie mobilfunkspezifische Funktionen wie beispielsweise die Mobilitätsverwaltung der im Mobilfunknetz sich frei bewegenden mobilen Teilnehmer.

Das Mobilfunknetz verfügt über mehrere Teilnehmerdatenbasen, die von zentralen Heimatregistern HLR und dezentralen Besucherregistern VLR gebildet werden. Jeder Mobilvermittlungsstelle CSC1, CSC2 ist eines der Besucherregister VLR zugeordnet, um die im Versorgungsbereich der Mobilvermittlungsstelle sich aufhaltenden Teilnehmer zu registrieren und deren Teilnehmerdaten einschließlich der Dienstedaten von Basis-Telekommunikationsdiensten und Zusatzdiensten zu speichern. Zur Aufenthaltsregistrierung werden die Teilnehmerdaten und Aufenthaltsinformationen für die mobilen Teilnehmer in den Besucherregistern VLR als semipermanente Daten, die für die Dauer des Aufenthalts im jeweiligen Versorgungsbereich notwendig sind, gespeichert. Als Aufenthaltsinformation wird eine Aufenthaltsbereichskennung (Location Area Identity) gemäß dem GSM-Standard für die jeweiligen Teilnehmer hinterlegt, um die Teilnehmerdaten der im Versorgungsbereich der MobilvermittlungsstelleCSC1, CSC2 anwesenden mobilen Teilnehmer für die Verbindungsbehandlung bzw. Dienstebehandlung bereitzustellen. Gegenüber dem Besucherregister VLR dient ein Heimatregister HLR als zentrale Teilnehmerdatenbasis, in der alle für den mobilen Teilnehmer relevanten Daten registriert sind. Daher sind unter anderem auch die für den mobilen Teilnehmer jeweils nutzbaren Dienste und Dienstedaten dort hinterlegt.

Für die Verbindungsbehandlung und Dienstebehandlung im Mobilfunknetz PLMN werden Zeichengabefunktionen zwischen den Einrichtungen des vermittlungstechnischen Teilsystems bzw. zwischen den Einrichtungen des vermittlungstechnischen Teilsystems und der Basisstationssteuerung des Basisstationssystems BSS eingesetzt. Verbindungen, die zwischen einem mobilen Teilnehmer und einem anderen Teilnehmer in einem leitungsgebundenen Fernsprechnetz (PSTN) oder in einem anderen leitungsgebundenen Festetz (z.B. ISDN) oder einem mobilen Teilnehmer des eigenen oder eines anderen Mobilfunknetzes verlaufen, werden gemäß dem zentralen Zeichengabesystem No. 7 (CCS7) behandelt. Das zentrale Zeichengabesystem CCS7 verfügt über einen mobilfunkspezifischen Anwenderteil MAP, der die Kommunikation zwischen den Mobilfunknetzelementen regelt, und über einen ISDN-Benutzerteil ISUP, der die Zeichengabefunktionen an der Schnittstelle des Mobilfunknetzes PLMN zum Festnetz ISDN bereitstellt. Während die MAP-Funktionen in erster Linie den Informationsaustausch zwischen den Teilnehmerdatenbasen betrifft, wird der Benutzerteil ISUP auch auf den Verbindungsleitungen zwischen den Mobilvermittlungsstellen verwendet. Die ISUP-Funktionen werden beispielsweise bei einem Handover nach der Verbindungsübergabe von einer ersten Mobilvermittlungsstelle zu einer zweiten Mobilvermittlungsstelle benötigt.

Neben dem zentralen Zeichengabesystem No. 7 wird ein weiteres Zeichengabesystem EDSS1 eingesetzt, durch das drahtgebundene ISDN-Teilnehmer über einen Multiplexanschluß zu einer Nebenstelleneinrichtung oder über teilnehmerindividuelle Drahtleitungen direkt an die Mobilvermittlungsstelle CSC1 bzw. CSC2 anschließbar sind. Damit stellt die Mobilvermittlungsstelle CSC1 bzw. CSC2 eine kombinierte Vermittlungseinrichtung (Combined Switching Center) für unterschiedliche Anschlußtechniken und Kommunikationsarten dar. Somit sind sowohl mobile als auch drahtgebundene Teilnehmerstationen unabhängig vom jeweiligen Standard auf der Luftschnittstelle - beispielsweise GSM, DECT, CDMA (Code Division Multiple Access) - parallel an die Mobilvermittlungsstelle CSC1 bzw. CSC2 anschließbar. Daher ist auch die Anschaltung von Nebenstelleneinrichtungen PBX1 und PBX2 des privaten Netzes PISN an die Mobilvermittlungsstellen CSC1 und CSC2 des öffentlichen Mobilfunknetzes PLMN möglich. Die Mobilitätsverwaltung zwischen privatem Netz PISN und öffentlichem Mobilfunknetz PLMN beruht auf der Gleichberechtigung beider Netze, so daß die mobilen Teilnehmer über ihre kombinierten Funkteilnehmerstationen DMH im privaten Netz PISN - beispielsweise zur Verbindung mehrerer Standorte einer Firma bzw. mehrerer Firmen untereinander - über eine DECT-Basisstation und im öffentlichen Mobilfunknetz über die GSM-Basis-Sende-Empfangsstation erreichbar sind. Die mobilen Teilnehmer bewegen sich mit ihren kombinierten Funkteilnehmerstätionen zwischen den Funkversorgungsbereichen des öffentlichen Mobilfunknetzes PLMN und den Bereichen der Nebenstelleneinrichtungen PBX1 und PBX2 des privaten Netzes PISN. Außer den beiden in Figur 1 dargestellten Nebenstelleneinrichtungen PBX1 und PBX2 können selbstverständlich weitere Nebenstelleneinrichtungen im privaten Netz PISN, das im vorliegenden Beispiel auf der Basis des DECT-Standards arbeitet, vorhanden sein.

Das private Netz PISN weist ebenfalls dezentrale Teilnehmerdatenbasen VDB und mindestens eine zentrale Teilnehmerdatenbasen HDB auf. Dabei wird das Teilnehmerprofil mit den Teilnehmerdaten einschließlich der im privaten Netz möglichen Zusatzdienste und Dienstedaten zentral in der Teilnehmerdatenbasis HDB gespeichert, während die dezentralen Teilnehmerdatenbasen Teilnehmerdatenbasen VDB einer oder mehrerer Nebenstelleneinrichtungen zugeordnet sein können. Darüber hinaus ist auch eine Konfiguration mit einem öffentlichen Mobilfunknetz PLMN und zwei privaten Netzen, einem Heimat-PISN und einem Besucher-PISN, die über das Mobilfunknetz verbunden sind, möglich. Eine weitere Alternative zur Darstellung in Figur 1 besteht darin, daß der mobile Teilnehmer sich mit einer Mobilteilnehmerstation MS herkömmlicher Art nur in den Funkversorgungsbereichen des öffentlichen Mobilfunknetzes PLMN bewegt. Die Mobilteilnehmerstationen MS der mobilen Teilnehmer sind dann begrenzt auf ankommende und abgehende Anrufe im GSM-Modus. Eine Anbindung an DECT-Basisstationen wie bei den kombinierten Funkteilnehmerstationen DMH gemäß Figur 1 wird von den Mobilteilnehmerstationen MS nicht unterstützt. Daher registrieren sich die mobilen Teilnehmer an den drahtgebundenen Anschlüssen der Nebenstelleneinrichtungen PBX1, PBX2 des privaten Netzes PISN manuell über drahtgebundene Teilnehmerstationen FA1 und FA2. Auf diese Weise erfolgt an der Nebenstelleneinrichtung PBX1 bzw. PBX2 die Einbuchung des Teilnehmers manuell, während bei den kombinierten Funkteilnehmerstationen gemäß Figur 1 ein Einbuchen an der jeweiligen Nebenstelleneinrichtung von der jeweiligen Funkteilnehmerstation automatisch veranlaßt wird. Unabhängig von der Art des Einbuchens und der Teilnehmerstation sind Dienste und Zusatzdienste steuerbar über jeweils vom Teilnehmer vorgenommene Teilnehmerselbsteingaben in die jeweilige Teilnehmerstation. Dies bedeutet, daß durch die Teilnehmerselbsteingaben Zusatzdienste im privaten Netz PISN und im Mobilfunknetz PLMN aktivierbar/deaktivierbar sowie die Dienstedaten der Zusatzdienste änderbar sind.

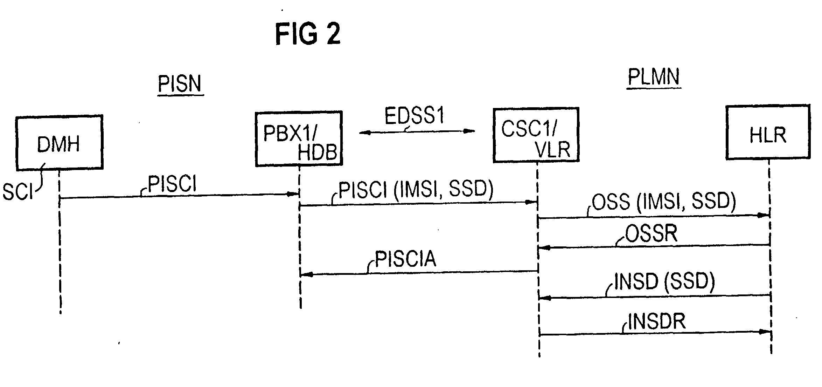

Figur 2 zeigt den Nachrichtenfluß zwischen den Einrichtungen des privaten Netzes PISN und den Einrichtungen des Mobilfunknetzes PLMN bei der Behandlung von Zusatzdiensten, die vom Teilnehmer in jedem der beiden Netze nutzbar und über Teilnehmerselbsteingaben steuerbar sind. Der mobile Teilnehmer befindet sich mit seiner Funkteilnehmerstation DMH im Bereich der Nebenstelleneinrichtung PBX1, die in Verbindung mit der Teilnehmerdatenbasis HDB steht. Es sei ein Aufenthaltsortwechsel des Teilnehmers in das Mobilfunknetz PLMN angenommen, wo er im Versorgungsbereich der Mobilvermittlungsstelle CSC1 mit zugehörigem Besucherregister VLR bedient wird. Mit dem Besucherregister VLR ist das Heimatregister HLR verbunden, das die jeweiligen Besucherregister über laufende Änderungen der registrierten Teilnehmer informiert. Zwischen den beiden Netzen existiert eine Schnittstelle, über die gemäß dem Zeichengabesystem EDSS1 Nachrichten und Informationen gegenseitig übertragen werden können. Dabei wird jeweils eine Zeichengabeverbindung zwischen einer Nebenstelleneinrichtung, im vorliegenden Beispiel der Nebenstelleneinrichtung PBX1, und einer Mobilvermittlungsstelle, im vorliegenden Beispiel der Mobilvermittlungsstelle CSC1, hergestellt.

Der Teilnehmer aktiviert/deaktiviert einen Zusatzdienst - z.B. Anrufumlenkung (call forwarding) - über die Teilnehmerselbsteingabe SCI in seine Funkteilnehmerstation DMH. Als Beispiele für weitere, jeweils über Teilnehmerselbsteingaben steuerbare Zusatzdienste seien die Anzeige der Rufnummer des anrufenden Teilnehmers bzw. die Unterdrückung der Anzeige der Rufnummer, die Anzeige von Gebühreninformationen, die Bildung von geschlossenen Benutzergruppen aus mobilen Teilnehmern und/oder Teilnehmern von Festnetzen, sowie die Anzeige der Rufnummer des angerufenen Teilnehmers bzw. die Unterdrückung der Anzeige der Rufnummer, genannt. Die Teilnehmerselbsteingabe SCI umfaßt eine Grundfunktion zur Übertragung einer Nachricht bzw. zum Beenden einer Verbindung, sowie eine Prozedur zur Aktivierung eines Dialogs zwischen der Funkteilnehmerstation und dem Netz, insbesondere den Teilnehmerdatenbasen des Netzes. Diese Prozeduren können entweder zu Beginn oder zum Ende einer Verbindung oder auch während einer Verbindung vom Teilnehmer initiiert werden. Auf Grund der Teilnehmerselbsteingabe SCI sendet die Funkteilnehmerstation DMH eine Nachricht PISCI an die für sie zuständige Nebenstelleneinrichtung PBX1 aus. In dieser Nachricht PISCI wird das Vorliegen der Teilnehmerselbsteingabe SCI der Nebenstelleneinrichtung PBX1 bzw. der zugehörigen Teilnehmerdatenbasis HDB mitgeteilt. Von der Teilnehmerdatenbasis HDB werden die auf Grund der Teilnehmerselbsteingabe SCI geänderten Dienstedaten SSD bereitgestellt. Die Nebenstelleneinrichtung PBX1 sendet die Dienstedaten SSD zusammen mit der internationalen Mobilteilnehmerkennung IMSI, die den mobilen Teilnehmer innerhalb des GSM-Mobilfunknetzes identifiziert, in der Nachricht PISCI über die Schnittstelle zur Mobilvermittlungsstelle CSC1 aus.

Auf Grund der netzübergreifend über die Schnittstelle zwischen beiden Netzen empfangenen Nachricht PISCI erzeugt das Besucherregister VLR eine Nachricht OSS, in der dem Heimatregister HLR mitgeteilt wird, daß eine Zusatzdienste betreffende Funktion auszuführen ist. Die Nachricht OSS, die die Dienstedaten SSD und die internationale Mobilteilnehmerkennung IMSI enthält, wird vom Heimatregister HLR mit einer Nachricht OSSR bestätigt. Sobald die Bestätigung in Form der Nachricht OSSR vom Besucherregister VLR empfangen wird, sendet die Mobilvermittlungsstelle CSC1 über die zwischen beiden Netzen bestehende Schnittstelle eine Nachricht PISCIA aus, in der der Nebenstelleneinrichtung PBX1 bestätigt wird, daß Änderungen der Dienstedaten des Zusatzdienstes im Mobilfunknetz vorgenommen werden. Auf diese Weise erhält das private Netz eine Rückmeldung vom Mobilfunknetz, daß die im Bereich der Nebenstelleneinrichtung PBX1 durch die Teilnehmerselbsteingabe SCI bedingten Änderungen der Dienstedaten im Mobilfunknetz ebenfalls registriert und in der entsprechenden Teilnehmerdatenbasis gespeichert sind. Damit sind die Dienstedaten des Zusatzdienstes in beiden Netzen aufeinander synchronisiert, so daß Datenkonsistenz in beiden Netzen bezüglich der nutzbaren Zusatzdienste gewährleistet ist. Der vom privaten Netz über die Schnittstelle gemeldete Status des Zusatzdienstes wird in die Teilnehmerdatenbasis HLR bzw. VLR eingetragen, als hätte der mobile Teilnehmer die entsprechende Teilnehmerselbsteingabe im Versorgungsbereich der Mobilvermittlungsstelle CSC1 vorgenommen. Das Heimatregister HLR sendet eine Nachricht INSD zum Besucherregister VLR aus, in der die geänderten Dienstedaten SSD mitgeteilt werden. Das Besucherregister VLR bestätigt daraufhin den Empfang der Nachricht INSD in einer Antwortnachricht INSDR, die zum Heimatregister HLR rückgesendet wird.

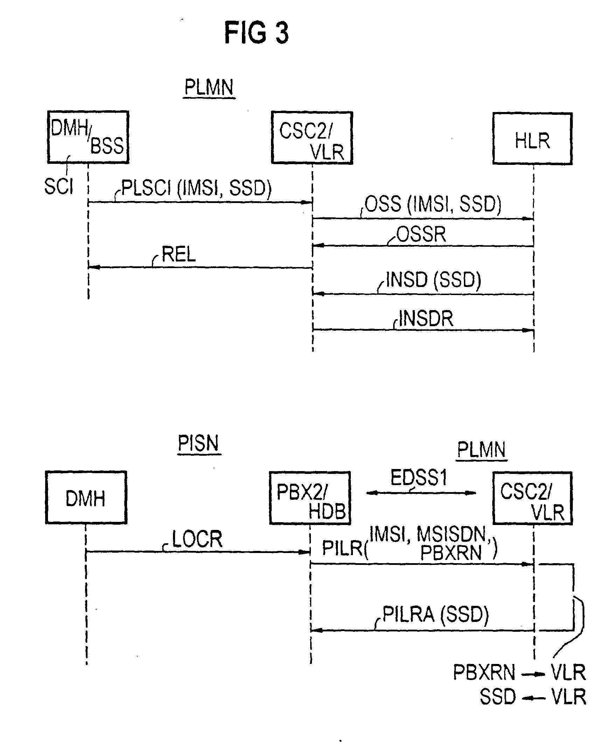

Figur 3 zeigt den Nachrichtenfluß zwischen den Einrichtungen der beiden Netze für den Fall, daß eine Teilnehmerselbsteingabe bei Aufenthalt des Teilnehmers im Mobilfunknetz PLMN vorgenommen wurde, und der Teilnehmer seinen Aufenthaltsort vom Versorgungsbereich einer Mobilvermittlungsstelle in den Bereich einer Nebenstelleneinrichtung wechselt. Der mobile Teilnehmer nimmt an seiner Funkteilnehmerstation DMH, die über die Funkschnittstelle mit dem Basisstationssystem BSS verbunden ist, die Teilnehmerselbsteingabe SCI' vor, wobei er sich im Versorgungsbereich der Mobilvermittlungsstelle CSC2 mit zugehörigem Besucherregister VLR befindet. Das Besucherregister VLR steht mit dem Heimatregister HLR in Verbindung. Die Mobilvermittlungsstelle CSC2 empfängt über das Basisstationssystem BSS eine Nachricht PLSCI, in der das Vorliegen der Teilnehmerselbsteingabe SCI' in die Funkteilnehmerstation DMH mitgeteilt wird. Zusammen mit der internationalen Mobilteilnehmerkennung IMSI werden Dienstedaten SSD des von der Teilnehmerselbsteiengabe betroffenen Zusatzdienstes in der Nachricht PLCI übertragen.

Das zur Mobilvermittlungsstelle CSC2 gehörige Besucherregister VLR sendet die Nachricht OSS mit der internationalen Mobilteilnehmerkennung IMSI und den Dienstedaten SSD zum Heimatregister HLR aus. Damit wird dem Heimatregister HLR signalisiert, daß eine jeweils einen Zusatzdienst und dessen Dienstedaten betreffende Funktion auszuführen ist. Das Heimatregister HLR bestätigt den Empfang der Nachricht OSS durch Rücksenden einer Nachricht OSSR an das Besucherregister VLR. Vom Besucherregister VLR wird daraufhin eine Nachricht REL erzeugt und ausgesendet, die durch das Basisstationssystem BSS zur Funkteilnehmerstation DMH über die Funkschnittstelle übertragen wird. In der Nachricht REL wird der Funkteilnehmerstation DMH signalisiert, daß eine durch die Teilnehmerselbsteingabe bedingte Änderung der Dienstedaten für den Zusatzdienst im Mobilfunknetz registriert wurde. Die Nachricht REL bewirkt ein Auslösen der Verbindung, durch die das Vorliegen der Teilnehmerselbsteingabe bezüglich eines Zusatzdienstes dem Netz übermittelt wurde. Das Heimatregister HLR informiert das Besucherregister VLR über laufende Änderungen der Teilnehmerdaten, im vorliegenden Beispiel der zu dem Zusatzdienst gehörigen Dienstedaten SSD, in dem die geänderten Dienstedaten SSD in der Nachricht INSD zum Besucherregister VLR übertragen werden. Das Besucherregister VLR bestätigt den Empfang der Nachricht INSD durch Rücksenden der Nachricht INSDR zum Heimatregister HLR. Somit sind die auf den Zusatzdienst bezogenen Dienstedaten auf den durch die Teilnehmerselbsteingabe SCI' bedingten aktuellen Stand im Mobilfunknetz PLMN gebracht.

Eine Aktualisierung der Dienstedaten im privaten Netz PISN bzw. in dessen Teilnehmerdatenbasen erfolgt dann, wenn aus dem privaten Netz PISN eine Anforderung zur Aktualisierung einer für den Teilnehmer im Mobilfunknetz registrierten Aufenthaltsinformation empfangen wird. Dies ist der Fall, wenn der mobile Teilnehmer vom Versorgungsbereich der Mobilvermittlungsstelle CSC2 in den Bereich der Nebenstelleneinrichtung PBX2 unter DECT-Funkabdeckung sich bewegt. Durch die Funkteilnehmerstation DMH erfolgt eine automatische Einbuchung des Teilnehmers im Bereich der Nebenstelleneinrichtung PBX2, die im privaten Netz PISN ebenfalls mit einer Teilnehmerdatenbasis HDB in Verbindung steht. Bei der automatischen Einbuchung des Teilnehmers wird von der Funkteilnehmerstation DMH eine Nachricht LOCR zur zuständigen Nebenstelleneinrichtung PBX2 gesendet, in der um die Registrierung des Teilnehmers im privaten Netz PISN bzw. in dessen Teilnehmerdatenbasis HDB gebeten wird. Die Nebenstelleneinrichtung PBX2 sendet daraufhin über die Schnittstelle zwischen beiden Netzen eine Nachricht PILR zur Mobilvermittlungsstelle CSC2 aus. Zu diesem Zweck ist eine Zeichengabeverbindung gemäß dem Zeichengabesystem EDSS1 netzübergreifend aufgebaut. In der Nachricht PILR wird der Mobilvermittlungsstelle CSC2 mitgeteilt, eine Aktualisierung der im Besucherregister VLR registrierten Aufenthaltsinformation vorzunehmen. In der Nachricht PILR werden die internationale Mobilteilnehmerkennung IMSI, die internationale Mobilteilnehmerrufnummer MSISDN, sowie eine Nebenstellen-Leitwegnummer PBXRN übertragen.

Die internationale Mobilteilnehmerrufnummer MSISDN wird vom Anrufer verwendet, um eine Verbindung zu einem mobilen Teilnehmer im Mobilfunknetz PLMN herzustellen, und wird vom Netz verwendet, um die Teilnehmerdaten der mobilen Teilnehmer im Heimatregister HLR zu adressieren. Die Nebenstellen-Leitwegnummer gibt an, wie der Teilnehmer über die Nebenstelleneinrichtung PBX2 im Privatnetz PISN erreibar ist. Sie wird zur Unterstützung der Mobilität des Teilnehmers zwischen beiden Netzen als Aufenthaltsinformation für den Teilnehmer im Besucherregister VLR gespeichert. Sie umfaßt eine Anschlußnummer, an der die jeweilige Nebenstelleneinrichtung erkennbar ist, sowie eine Durchwahlnummer, unter der der Teilnehmer von der Nebenstelleneinrichtung identifizierbar ist. Üblicherweise ist für einen mobilen Teilnehmer in dem Besucherregister VLR als Aufenthaltsinformation eine Aufenthaltsbereichskennung (location area identity) gemäß dem GSM-Verfahren gespeichert. Für den Fall, daß der mobile Teilnehmer vom Mobilfunknetz in das private Netz übergewechselt ist, wird als neue Aufenthaltsinformation im Besucherregister VLR die Nebenstellen-Leitwegnummer PBXRN eingetragen, um jeweils im Mobilfunknetz ankommende Anrufe für den Teilnehmer an seinen Aufenthaltsort im privaten Netz weiterleiten zu können. Das Besucherregister VLR, das vom Heimatregister HLR bereits über die Änderungen der Dienstedaten, bezogen auf den von der Teilnehmerselbsteingabe betroffenen Zusatzdienst, informiert ist, liefert die geänderten Dienstedaten SSD an die Mobilvermittlungsstelle CSC2, die die geänderten Dienstedaten SSD in einer Nachricht PILRA über die Schnittstelle zur Nebenstelleneinrichtung PBX2 aussendet. Die auf den Zusatzdienst bezogenen Dienstedaten SSD können daraufhin in der Teilnehmerdatenbasis HDB des privaten Netzes PISN gespeichert werden. Durch die Nachricht PILRA wird die Anforderung zur Aktualisierung der Aufenthaltsinformation und zur Übertragung des Diensteprofils für den Zusatzdienst beantwortet. Somit sind die Dienstedaten des Zusatzdienstes in beiden Netzen aufeinander synchronisiert, und der durch die Teilnehmerselbsteingabe im Mobilfunknetz geänderte Status der Dienstedaten dem privaten Netz, in das der mobile Teilnehmer übergewechselt ist, gemeldet und registriert worden, als ob der Teilnehmer die entsprechende Teilnehmerselbsteingabe im Bereich der Nebenstelleneinrichtung, das heißt unter DECT-Funkabdeckung, durchgeführt hätte.

## Patentansprüche

1. Verfahren zur Behandlung von Zusatzdiensten, die von mobilen Teilnehmern, die sich in einem privaten Netz (PISN) mit Nebenstelleneinrichtungen (PBX1,PBX2) und in einem Mobilfunknetz (PLMN) mit Mobilvermittlungsstellen (CSC1,CSC2) bewegen können, benutzt und durch Teilnehmerselbsteingaben (SCI,SCI') in eine Teilnehmerstation (DMH), über die ankommende Anrufe empfangen und abgehende Anrufe ausgesendet werden, gesteuert werden und bei dem Dienstedaten (SSD) der Zusatzdienste bei Aufenthalt des Teilnehmers im Bereich einer Nebenstelleneinrichtung (PBX1) im privaten Netz und/oder bei Aufenthalt des Teilnehmers im Versorgungsbereich einer Mobilvermittlungsstelle (CSC2) im Mobilfunknetz registriert werden,
**dadurch gekennzeichnet,**
**daß** bei einer Änderung des Aufenthaltsorts des Teilnehmers vom Bereich einer Nebenstelleneinrichtung (PBX1) in den Versorgungsbereich einer Mobilvermittlungsstelle (CSC1) oder umgekehrt die Dienstedaten (SSD) der Zusatzdienste jeweils vom ursprünglichen Netz (PISN) bereitgestellt und über eine Schnittstelle zwischen beiden Netzen netzübergreifend zum neuen Netz übertragen und dort ebenfalls registriert werden.

2. Verfahren nach Anspruch 1,
**dadurch gekennzeichnet,**
**daß** jeweils im Bereich einer Nebenstelleneinrichtung (PBX1) durch Teilnehmerselbsteingabe (SCI) bedingte Änderungen der Dienstedaten nach Übertritt des Teilnehmers in den Bereich einer Mobilvermittlungsstelle (CSC1)unmittelbar vom privaten Netz (PISN) zum Mobilfunknetz (PLMN) gemeldet und die geänderten Dienstedaten in mindestens einer Teilnehmerdatenbasis (VLR,HLR) des Mobilfunknetzes gespeichert werden.

3. Verfahren nach Anspruch 2,
**dadurch gekennzeichnet,**
**daß** die geänderten Dienstedaten (SSD) in einer Nachricht (PISCI), in der das Vorliegen einer Teilnehmerselbsteingabe mitgeteilt wird, von der Nebenstelleneinrichtung (PBX1) zur Mobilvermittlungsstelle (CSC1) übertragen werden.

4. Verfahren nach Anspruch 1,
**dadurch gekennzeichnet,**
**daß** jeweils im Versorgungsbereich einer Mobilvermittlungsstelle (CSC2) durch Teilnehmerselbsteingabe (SCI') bedingte Änderungen der Dienstedaten nach Übertritt des Teilnehmers in den Bereich einer Nebenstelleneinrichtung (PBX2) vom Mobilfunknetz (PLMN) zum privaten Netz (PISN) gemeldet und die geänderten Dienstedaten (SSD) in mindestens einer Teilnehmerdatenbasis (HDB) des privaten Netzes (PISN) gespeichert werden.

5. Verfahren nach Anspruch 4,
**dadurch gekennzeichnet,**
**daß** die geänderten Dienstedaten (SSD) von der Mobilvermittlungsstelle (CSC2) zur Nebenstelleneinrichtung (PBX2) übertragen werden, sobald die Mobilvermittlungsstelle (CSC2) zuvor von der Nebenstelleneinrichtung (PBX2) eine Nachricht (PILR) empfängt, durch die eine Aktualisierung einer in einer Teilnehmerdatenbasis (VLR) des Mobilfunknetzes (PLMN) registrierten Aufenthaltsinformation bewirkt wird.

6. Verfahren nach Anspruch 5,
**dadurch gekennzeichnet,**
**daß** in der Nachricht (PILR) eine Nebenstellen-Leitwegnummer (PBXRN), die angibt, wie der Teilnehmer über die Nebenstelleneinrichtung (PBX2) im privaten Netz (PISN) erreichbar ist, mitgeteilt und als Aufenthaltsinformation in der Teilnehmerdatenbasis (VLR) gespeichert wird.

7. Verfahren nach einem der vorhergehenden Ansprüche,
**dadurch gekennzeichnet,**
**daß** von dem Teilnehmer eine kombinierte Funkteilnehmerstation (DMH) verwendet wird, durch die der Teilnehmer in den Versorgungsbereichen der Mobilvermittlungsstellen (CSC1,CSC2) des Mobilfunknetzes (PLMN) und in den Bereichen der Nebenstelleneinrichtungen (PBX1,PBX2) des privaten Netzes (PISN) automatisch eingebucht wird.

8. Verfahren nach einem der Ansprüche 1 bis 6,
**dadurch gekennzeichnet,**
**daß** von dem Teilnehmer eine Mobilteilnehmerstation verwendet wird, durch die der Teilnehmer in den Versorgungsbereichen der Mobilvermittlungsstellen (CSC1,CSC2) des Mobilfunknetzes (PLMN) automatisch eingebucht wird, und daß der Teilnehmer sich manuell über eine drahtgebundene Teilnehmerstation in den Bereichen der Nebenstelleneinrichtungen (PBX1,PBX2) des privaten Netzes (PISN) einbucht.

9. System zur Behandlung von Zusatzdiensten, die von Teilnehmern, die sich in einem privaten Netz (PISN) mit Nebenstelleneinrichtungen (PBX1,PBX2) und in einem Mobilfunknetz (PLMN) mit Mobilvermittlungsstellen (CSC1,CSC2) bewegen können, nutzbar und durch Teilnehmerselbsteingaben (SCI,SCI') in eine Teilnehmerstation (DMH), über die ankommende Anrufe empfangen und abgehende Anrufe ausgesendet werden, steuerbar sind, und deren Dienstedaten (SSD) bei Aufenthalt des Teilnehmers im Bereich einer Nebenstelleneinrichtung (PBX1) im privaten Netz oder bei Aufenthalt des Teilnehmers im Versorgungsbereich einer Mobilvermittlungsstelle (CSC2) im Mobilfunknetz registriert sind,
**dadurch gekennzeichnet,**
**daß** bei einer Änderung des Aufenthaltsorts des Teilnehmers vom Bereich einer Nebenstelleneinrichtung PBX1) in den Versorgungsbereich einer Mobilvermittlungsstelle (CSC1) oder umgekehrt Mittel zur Bereitstellung der zu den Zusatzdiensten gehörigen Dienstedaten (SSD) im ursprünglichen Netz (PISN), Mittel zur netzübergreifenden Übertragung der Dienstedaten (SSD) über eine Schnittstelle vom ursprünglichen Netz (PISN) zum neuen Netz (PLMN) und Mittel zur Registrierung der empfangenen Dienstedaten (SSD) im neuen Netz (PLMN) vorgesehen sind.

## Claims

1. Method for handling additional services which are used by mobile subscribers who can move in a private network (PISN) with private branch exchange devices (PBX1, PBX2) and in a mobile radio network (PLMN) with mobile switching centres (CSC1, CSC2) and are controlled by subscriber controlled inputs (SCI, SCI') to a subscriber station (DMH) via which incoming calls are received and outgoing calls are transmitted, and in which service data (SSD) relating to the additional services are registered in the private network when the subscriber is located in the area of a private branch exchange device (PBX1), and are registered in the mobile radio network when the subscriber is located in the supply area of a mobile switching centre (CSC2)
**characterized**
**in that**, when the subscriber's location changes from the area of a private branch exchange device (PBX1) to the supply area of a mobile switching centre (CSC1) or vice-versa, the service data (SSD) relating to the additional services are in each case provided by the original network (PISN) and are transmitted between the networks to the new network via an interface between the two networks, and are likewise registered in the new network.

2. Method according to Claim 1,
**characterized**
**in that**, after the subscriber passes to the area of a mobile switching centre (CSC1), changes to the service data in each case resulting from subscriber controlled inputs (SCI) in the area of a private branch exchange device (PBX1) are reported directly from the private network (PISN) to the mobile radio network (PLMN), and the amended service data are stored in at least one subscriber database (VLR, HLR) in the mobile radio network.

3. Method according to Claim 2,
**characterized**
**in that** the amended service data (SSD) are transmitted from the private branch exchange device (PBx1) to the mobile switching centre (CSC1) in a message (PISCI) in which the presence of a subscriber controlled input is reported.

4. Method according to Claim 1,
**characterized**
**in that**, after the subscriber moves to the area of a private branch exchange device (PBX2), changes to the service data in each case resulting from subscriber controlled inputs (SCI') in the supply area of a mobile switching centre (CSC2) are reported by the mobile radio network (PLMN) to the private network (PISN), and the amended service data (SSD) are stored in at least one subscriber database (HDB) in the private network (PISN).

5. Method according to Claim 4,
**characterized**
**in that** the amended service data (SSD) are transmitted by the mobile switching centre (CSC2) to the private branch exchange device (PBX2) as soon as the mobile switching centre (CSC2) has actually received from the private branch exchange device (PBX2) a message (PILR) which results in updating of location information registered in a subscriber database (VLR) in the mobile radio network (PLMN).

6. Method according to Claim 5,
**characterized**
**in that** a private branch exchange routing number (PBXRN), which indicates how the subscriber can be accessed via the private branch exchange device (PBX2) in the private network (PISN), is reported in the message (PILR) and is stored as location information in the subscriber database (VLR).

7. Method according to one of the preceding claims,
**characterized**
**in that** the subscriber uses a combined radio subscriber station (DMH) by means of which the subscriber is registered automatically in the supply areas of the mobile switching centres (CSC1, CSC2) of the mobile radio network (PLMN) and in the areas of the private branch exchange devices (PBX1, PBX2) of the private network (PISN).

8. Method according to one of Claims 1 to 6,
**characterized**
**in that** the subscriber uses a mobile subscriber station by means of which the subscriber is automatically registered in the supply areas of the mobile switching centres (CSC1, CSC2) of the mobile radio network (PLMN), and in that the subscriber registers manually, via a landline subscriber station, in the areas of the private branch exchange devices (PBX1, PBX2) of the private network (PISN).

9. System for handling additional services which can be used by subscribers who can move in a private network (PISN) having private branch exchange devices (PBX1, PBX2) and in a mobile radio network (PLMN) having mobile switching centres (CSC1, CSC2), and can be controlled by means of subscriber controlled inputs (SCI, SCI') in a subscriber station (DMH) via which incoming calls are received and outgoing calls are transmitted, and whose service data (SSD) are registered in the private network when the subscriber is located in the area of the private branch exchange device (PBX1), and are registered in the mobile radio network when the subscriber is located in the supply area of the mobile switching centre (CSC2),
in that, when the location of the subscriber changes from the area of a private branch exchange device (PBX1) to the supply area of a mobile switching centre (CSC1), or vice-versa, means are provided for providing the service data (SSD) associated with the additional services in the original network (PISN), means are provided for transmitting the service data (SSD) between networks via an interface from the original network (PISN) to the new network (PLMN), and means are provided for registering the received service data (SSD) in the new network (PLMN).

## Revendications

1. Procédé pour traiter des services supplémentaires qui sont utilisés par des abonnés mobiles, qui peuvent se déplacer dans un réseau privé (PISN) avec des installations à postes supplémentaires (PBX1, PBX2) et dans un réseau de radio mobile (PLMN) avec des centraux de commutation de radio mobile (CSC1, CSC2), et qui sont commandés par des entrées (SCI, SCI'), effectuées par l'abonné lui-même sur un poste d'abonné (DMH), grâce auquel sont reçus des appels en arrivée et sont émis des appels en départ, et au cours duquel des données (SSD) des services supplémentaires sont enregistrées, lors du séjour de l'abonné dans la zone d'une installation à postes supplémentaires (PBX1) dans le réseau privé et/ou lors du séjour de l'abonné dans la zone de couverture d'un central de commutation de radio mobile (CSC2) dans le réseau de radio mobile,
**caractérisé par le fait**
**que**, lors d'une modification du lieu de séjour de l'abonné de la zone d'une installation à postes supplémentaires (PBX1) vers la zone de couverture d'un central de commutation de radio mobile (CSC1) ou vice versa, les données (SSD) des services supplémentaires sont mises à disposition par le réseau d'origine (PISN) respectif et transmises au nouveau réseau, au delà des limites des réseaux, par l'intermédiaire d'une interface entre les deux réseaux, et y sont également enregistrées.

2. Procédé selon la revendication 1
**caractérisé par le fait**
**que** des modifications des données des services provoquées, selon le cas, dans la zone d'une installation à postes supplémentaires (PBX1) par une entrée (SCI) effectuée par l'abonné lui-même, sont communiquées, immédiatement après le passage de l'abonné dans la zone d'un central de commutation de radio mobile (CSC1), par le réseau privé (PISN) au réseau de radio mobile (PLMN) et que les données modifiées des services sont mémorisées dans au moins une base de données d'abonnés (VLR, HLR) du réseau de radio mobile.

3. Procédé selon la revendication 2
**caractérisé par le fait**
**que** les données modifiées des services (SSD) sont transmises, de l'installation à postes supplémentaires (PBX1) au central de commutation de radio mobile (CSC1), dans un message (PISCI), par lequel la présence de l'entrée effectuée par l'abonné lui-même est communiquée.

4. Procédé selon la revendication 1
**caractérisé par le fait**
**que** les modifications des données des services provoquées, selon le cas, dans la zone de couverture d'un central de commutation de radio mobile (CSC2) par une entrée (SCI') effectuée par l'abonné lui-même, sont communiquées, après le passage de l'abonné dans la zone d'une installation à postes supplémentaires (PBX2) par le réseau de radio mobile (PLMN) au réseau privé (PISN) et que les données modifiées des services (SSD) sont mémorisées dans au moins une base de données d'abonnés (HDB) du réseau privé (PISN).

5. Procédé selon la revendication 4
**caractérisé par le fait**
**que** les données modifiées des services (SSD) sont transmises, du central de commutation de radio mobile (CSC2) à l'installation à postes supplémentaires (PBX2), dès que le central de commutation de radio mobile (CSC2) reçoit, de l'installation à postes supplémentaires (PBX2), un message (PILR) par lequel une actualisation d'une information de localisation, enregistrée dans une base de données d'abonnés (VLR) du réseau de radio mobile (PLMN), est provoquée.

6. Procédé selon la revendication 5
**caractérisé par le fait**
**que**, dans le message (PILR), un numéro d'itinéraire (PBXRN) de l'installation à postes supplémentaires, qui indique, comment l'abonné peut être atteint, dans le réseau privé (PISN), à travers l'installation à postes supplémentaires (PBX2), est communiqué et mémorisé dans la base de données d'abonnés (VLR) en tant qu'information de localisation.

7. Procédé selon l'une des revendications précédentes
**caractérisé par le fait**
**que** l'abonné utilise un poste combiné (DMH) d'abonné radio grâce auquel l'abonné est automatiquement annoncé dans les zones de couverture des centraux de commutation de radio mobile (CSC1, CSC2) du réseau de radio mobile (PLMN) et dans les zones des installations à postes supplémentaires (PBX1, PBX2) du réseau privé (PISN).

8. Procédé selon l'une des revendications 1 à 6
**caractérisé par le fait**
**que** l'abonné utilise un poste d'abonné mobile grâce auquel l'abonné est automatiquement annoncé dans les zones de couverture des centraux de commutation de radio mobile (CSC1, CSC2) du réseau de radio mobile (PLMN) et que l'abonné s'annonce manuellement, par l'intermédiaire d'un poste d'abonné fixe, dans les zones des installations à postes supplémentaires (PBX1, PBX2) du réseau privé (PISN).

9. Système pour traiter des services supplémentaires qui peuvent être utilisés par des abonnés mobiles, qui peuvent se déplacer dans un réseau privé (PISN) avec des installations à postes supplémentaires (PBX1, PBX2) et dans un réseau de radio mobile (PLMN) avec des centraux de commutation de radio mobile (CSC1, CSC2), et qui peuvent être commandés par des entrées (SCI, SCI'), effectuées par l'abonné lui-même sur un poste d'abonné (DMH), grâce auquel sont reçus des appels en arrivée et sont émis des appels en départ, et dont les données (SSD) sont enregistrées, lors du séjour de l'abonné dans la zone d'une installation à postes supplémentaires (PBX1), dans le réseau privé, ou lors du séjour de l'abonné dans la zone de couverture d'un central de commutation de radio mobile (CSC2), dans le réseau de radio mobile,
**caractérisé par le fait**
**que**, lors d'une modification du lieu de séjour de l'abonné de la zone d'une installation à postes supplémentaires (PBX1) vers la zone de couverture d'un central de commutation de radio mobile (CSC1) ou vice versa, des moyens sont prévus pour mettre à disposition les données (SSD) relatives aux services supplémentaires dans le réseau d'origine (PISN), des moyens sont prévus pour la transmission, au delà des limites des réseaux, des données des services (SSD), par l'intermédiaire d'une interface, du réseau d'origine (PISN) au nouveau réseau (PLMN), et des moyens sont prévus pour enregistrer les données des services (SSD) reçues dans le nouveau réseau (PLMN).
